# EUROPÄISCHE PATENTSCHRIFT

(11) **EP 2 088 183 B1**
(45) Veröffentlichungstag und Bekanntmachung des Hinweises auf die Patenterteilung: **15.05.2013**
(21) Anmeldenummer: 08151291.5
(22) Anmeldetag: 11.02.2008
(51) Int. Cl.: C09K 21/02

(54) **Brandschutzmischung zur Herstellung eines intumeszierenden Brandschutzartikels**
Fire retardant compound for production of a intumescent fire retardant item
Mélange ignifuge destiné à la fabrication d'un article ignifuge intumescent

(43) Veröffentlichungstag der Anmeldung: 12.08.2009
(60) Teilanmeldung: 12156616.0
(73) Patentinhaber: Doyma GmbH & Co, 28876 Oyten (DE)
(72) Erfinder: Schauber, Thomas, 69502 Hemsbach (DE); Hellbach, Björn, 69469 Weinheim (DE); Baser, Eyüp, 28329 Bremen (DE); Meirose, Nils, 28816 Stuhr (DE)
(74) Vertreter: Eisenführ, Speiser & Partner

(56) Entgegenhaltungen:
- EP-A- 0 354 632
- EP-A- 1 489 136
- EP-A- 1 669 490
- US-A- 4 686 244
- US-A- 5 132 054

## Beschreibung

Die vorliegende Erfindung betrifft (a) eine Brandschutzmischung zur Herstellung eines intumeszierenden Brandschutzartikels sowie (b) einen intumeszierenden Brandschutzartikel, die jeweils ein Matrixmaterial umfassen, in welches die Bestandteile (i) intumeszierender Blähgraphit, (ii) (A) intumeszierende, alkangefüllte Mikrokapseln bzw. (ii) (B) ein oder mehrere verkapselte Stickstoff-abspaltende und/oder Kohlendioxid-abspaltende Treibmittel, (iii) ein oder mehrere ausgewählte Flammschutzmittel, sowie gegebenenfalls (iv) sonstige Bestandteile eingebettet sind. Zu weiteren Merkmalen einer erfindungsgemäßen Brandschutzmischung oder eines erfindungsgemäßen intumeszierenden Brandschutzartikels siehe unten.

Die Erfindung betrifft insbesondere einen erfindungsgemäßen intumeszierenden Brandschutzartikel, der eine Rohrabschottung für brennbare Rohre oder ein Bestandteil einer solchen Rohrabschottung, oder eine Kabelabschottung oder ein Bestandteil einer solchen Kabelabschottung ist.

Ein weiterer Aspekt der vorliegenden Erfindung betrifft die Verwendung einer erfindungsgemäßen Brandschutzmischung zur Herstellung eines (vorzugsweise erfindungsgemäßen) intumeszierenden Brandschutzartikels.

Ferner betrifft die vorliegende Erfindung ein entsprechendes Verfahren zur Herstellung einer erfindungsgemäßen Brandschutzmischung zur Herstellung eines (vorzugsweise erfindungsgemäßen) intumeszierenden Brandschutzartikels, sowie ein Verfahren zur Abschottung von brennbaren Rohren oder von Kabeln.

Durchbrüche, Durchführungen (z.B. für Kabelstränge oder Rohre) sowie sonstige Öffnungen in Wänden, Böden und/oder Decken von Gebäuden müssen zum Zwecke des Brandschutzes mit Brandschutz-Abdichtungen versehen werden, um zu verhindern, dass im Brandfall das Feuer und der Rauch sich durch diese Öffnungen in andere Gebäudeteile ausbreiten können. Üblicherweise enthalten diese Brandschutz-Abdichtungen aufschäumende Materialien bzw. bestehen aus solchen und können in Form von härtenden, formlosen Brandschutzmassen oder in Form von vorgefertigten Streifen, Platten, Steinen und dergleichen eingesetzt werden, die in die abzudichtenden Öffnungen eingebracht werden oder diese in Form einer Abdeckung vor dem Mauerwerk abschließen.

Für solche Brandschutz-Abdichtungen verwendete aufschäumende Materialien enthalten üblicherweise als intumeszierendes Brandschutzadditiv eine oder mehrere expandierbare Graphit-Interkalationsverbindungen, die auch als intumeszierender Blähgraphit bekannt und im Handel erhältlich sind. Der Begriff intumeszierend ist eine Bezeichnung aus dem Brandschutz und bezeichnet eine Wirkungsweise besonderer Materialien, die im Brandfall aufschäumen, d.h. thermisch expandierbar sind, und eine vollständige oder zumindest teilweise isolierende Schutzschicht (z.B. in Form eines Hartschaums) bilden.

Expandierbare Graphit-Interkalationsverbindungen sind Verbindungen, bei denen kleine Fremdmoleküle zwischen den Gitterschichten des Graphits eingelagert (interkaliert) wurden. Solche Verbindungen werden üblicherweise hergestellt, indem gereinigter Naturgraphit in einer Lösung dispergiert wird, die ein Oxidationsmittel und eine starke Säure enthält. Durch die dabei stattfindende Oxidation entstehen in den Schichtgittern wasserunlösliche Salze sowie flüchtige Bestandteile, die dann auch für die Expansion im Brandfall verantwortlich sind. Beschreibungen entsprechender Herstellungsverfahren finden sich beispielsweise in EP 00 85 121 und US 4,091,083.

Durch die Wahl der eingesetzten Säure und des eingesetzten Oxidationsmittels lassen sich die späteren Eigenschaften der expandierbaren Graphite teilweise einstellen:

So ergibt die Verwendung von Schwefelsäure beispielsweise intumeszierende Blähgraphite mit einem thermisch bedingten Expansionsbeginn bei etwa 200 °C. Die Temperatur, bei der die thermisch bedingte Expansion beginnt, wird dabei (im Rahmen des vorliegenden Textes) als Onset-Temperatur bezeichnet. Der Einsatz von Salpetersäure oder Essigsäure dagegen führt zu einer Onset-Temperatur des intumeszierenden Blähgraphits im Bereich von etwa 150 bis 160 °C. Dabei ist der Einsatz von Essigsäure gegenüber dem Einsatz von Salpetersäure vorzuziehen, da bei Blähgraphiten, die Salpetersäure enthalten, im Brandfall nitrose Gase bzw. Stickoxide entstehen können.

Die verwendeten Oxidationsmittel haben hauptsächlich Einfluss auf das Expansionsvolumen, den Expansionsdruck sowie die Höhe der Expansion bei bestimmten Temperaturen. In der Vergangenheit wurde Kaliumdichromat als besonders starkes Oxidationsmittel eingesetzt. Da diese Verbindung jedoch hochgradig krebserregend ist, wird sie beispielsweise in Europa und Nordamerika nicht mehr eingesetzt. Auch der Einsatz von Kaliumchromat als Oxidationsmittel ist nicht mehr üblich. Wasserstoffperoxid und Kaliumpermanganat sind aus umweltschutz- und sicherheitstechnischer Sicht unbedenklicher und werden daher bevorzugt als Oxidationsmittel verwendet.

Sobald ein entsprechender Blähgraphit auf eine Temperatur gleich oder oberhalb der Onset-Temperatur erhitzt wird, breitet sich der Blähgraphit auf ein Volumen im Bereich von weniger als das 10-fache bis zu mehr als das 400-fache des ursprünglichen Volumens aus. Die Expansion wird dadurch verursacht, dass die in der Schichtgitterstruktur des Graphits eingelagerten Interkalate durch dieses Erhitzen unter Bildung gasförmiger Stoffe zersetzt werden, wodurch die Graphitpartikel senkrecht zu der Schichtebene expandiert werden (vergleiche hierzu EP 00 85 121).

Diese Volumenzunahme macht man sich in intumeszierenden Massen zunutze, die beispielsweise zur Brandschutzabdichtung von Rohrdurchführungen durch Wände und Decken von Gebäuden eingesetzt werden. Im Brandfall führt dann ein Erreichen der Onset-Temperatur zu einer Ausdehnung der enthaltenen Graphitteilchen und damit der gesamten die Durchführung abdichtenden intumeszierenden Masse. Dadurch kann auch nach dem Abbrennen der durch die Durchführung geführten Rohre ein Durchbruch des Feuers durch diese Durchführung verhindert bzw. zumindest verzögert werden.

Es gibt bereits eine Reihe von Versuchen, derartige Blähgraphite als intumeszierende Brandschutzadditive in Brandschutz-Abdichtungen einzusetzen.

Um beispielsweise einen Ringspalt brandschutzgemäß abzudichten, können entsprechende Brandschutz-Abdichtungen um das durch die Wand hindurchgeführte Rohr in die Öffnung eingeführt oder in Form einer Abdeckung auf der Wand angebracht werden. Problematisch ist dabei jedoch, dass im Falle des Einbringens einer Brandschutzabdichtung als Rohrabschottung in den verbleibenden Ringspalt der Wärmeeintrag im Brandfall über eine verhältnismäßig kleine Oberfläche erfolgt. Da die gewünschte Expansion des intumeszierenden Brandschutzadditivs in der Brandschutzmasse von diesem Wärmeeintrag abhängt, kann dies gemäß eigener Untersuchungen zur Folge haben, dass das abzudichtende Rohr kollabiert, bevor die Onset-Temperatur der intumeszierenden Brandschutzmasse erreicht ist. In diesem Falle wird ein Durchschlagen des Feuers und des Rauchs durch die Öffnung möglich.

Dies ist insbesondere bei herkömmlichen intumeszierenden Brandschutz-Abdichtungen der Fall, welche Blähgraphite als intumeszierendes Brandschutzadditiv enthalten, da deren Expansionsverhalten gerade für diesen Anwendungsfall nicht zu befriedigen vermögen. Charakteristische Kenngrößen für das Expansionsverhalten intumeszierender Materialien, insbesondere eines Blähgraphits, sind beispielsweise:
- als wichtigste Kenngröße die Onset-Temperatur des intumeszierenden Materials, d.h. für einen Blähgraphit die Temperatur, bei der die thermisch bedingte Expansion der Graphitpartikel des Blähgraphits beginnt;
- die Expansionsgeschwindigkeit des intumeszierenden Materials im Bereich der Onset-Temperatur [% / °C], welche die Ausdehnung des Materials in Prozent pro Grad Temperaturerhöhung angibt;
- das maximal erzielbare Expansionsvolumen [%/mg], welches die Ausdehnung des Materials (%) normiert auf die eingewogene Materialmenge (mg⁻¹) angibt;
- die Temperatur, bei der 100 % des maximal erzielbaren Expansionsvolumens erreicht werden (T₁₀₀),
- der mittlere Ausdehnungskoeffizient α [K⁻¹] zwischen der Onset-Temperatur und der T₁₀₀, definiert als α = L₀⁻¹ · ΔL · ΔT⁻¹, worin ΔL für die durch die Temperaturänderung ΔT hervorgerufene Längenänderung und L₀ für die Ausgangslänge einer Probe des intumeszierenden Materials steht. Die Längenänderung der Probe ist ein zur Ausdehnung des intumeszierenden Materials äquivalenter Messparameter und wird gemäß thermomechanischer Analyse (TMA) bestimmt (vgl. hierzu EP 1 489 136 A1).

Die genannten Kenngrößen, insbesondere die Expansionsgeschwindigkeit im Bereich der Onset-Temperatur [% / °C], das maximal erzielbare Expansionsvolumen [% / mg], die T₁₀₀ sowie der mittlere Ausdehnungskoeffizient α leiten sich beispielsweise aus der Methode der thermomechanischen Analyse ab (siehe hierzu beispielsweise EP 1 489 136 A1). Eine weitere charakteristische Kenngröße zur Beschreibung des Expansionsverhaltens intumeszierender Materialien, insbesondere eines Blähgraphits, ist die maximale freie Expansion. Die maximale freie Expansion [ml / g] beschreibt die Volumenzunahme des thermisch expandierenden Materials bzw. eines intumeszierenden Blähgraphits bezogen auf die eingesetzte Materialmenge in Gramm.

Gemäß dem Stand der Technik werden überwiegend kommerziell erhältliche Graphitpartikel (Blähgraphite) als intumeszierende Brandschutzadditive in entsprechenden intumeszierenden Brandschutz-Abdichtungen eingesetzt, die, wie bereits weiter oben beschrieben, Schwefelsäure, Salpetersäure oder Essigsäure enthalten und somit eine Onset-Temperatur von etwa 200 °C bzw. im Bereich von 150 bis 160 °C besitzen. Im Hinblick auf das erzielbare Expansionsvolumen und die Expansionsgeschwindigkeit im Bereich der Onset-Temperatur vermögen diese Blähgraphite jedoch nicht zu befriedigen.

Es hat sich in eigenen Untersuchungen herausgestellt, dass beim Einsatz solcher üblicher Blähgraphite und beim Einbringen der entsprechenden Brandschutz-Abdichtung in das Innere der zu verschließenden Öffnungen die Expansionsparameter dieser Blähgrahite nicht ausreichen, um bei einem (wie oben beschrieben) entsprechend geringen Wärmeeintrag die Intumeszenz der Brandschutz-Abdichtung bzw. der entsprechenden Mischung schnell genug auszulösen und ein ausreichend großes Expansionsvolumen zu erreichen, um die Brandschutz-Abdichtung auch beim Kollabieren eines durch die Öffnung hindurch geführten Rohres sicherzustellen (vergleiche hierzu EP 1 489 136 A1).

In EP 1 489 136 A1 sind Brandschutzuntersuchungen veröffentlicht, die zeigen, dass die als intumeszierendes Brandschutzadditiv verwendeten Blähgraphite (bei einer Teilchengröße von 250 bis 400 µm) für den Einsatz in entsprechenden Brandschutz-Abdichtungen vorzugsweise folgende Expansionsparameter aufweisen sollten, um eine effiziente Rohrabdichtung zu gewährleisten:

| | |
|---|---|
| Onset-Temperatur [°C]: | ≤ 160 |
| | |
| Volumen bzgl. Einwaage, | |
| d.h. maximal erzielbares Expansionsvolumen [% / mg]: | ≥ 550 |
| | |
| Expansionsgeschwindigkeit im Bereich der Onset-Temperatur [% / °C]: | ≥ 20 |
| | |
| Mittlerer Ausdehnungskoeffizient α | |
| zwischen Onset-Temperatur und T₁₀₀ [1 / K]: | ≥ 0,1 |

Die Messung dieser Expansionseigenschaften erfolgt gemäß EP 1 489 136 A1 mit Hilfe der thermomechanischen Analyse.

In EP 1 489 136 A1 wird zudem beschrieben, dass eine entsprechende Einstellung dieser bevorzugten Expansionsparameter über die Teilchengröße der Graphitpartikel ungeeignet sei. Größere Graphitpartikel besitzen zwar ein entsprechend höheres Expansionsvolumen, jedoch ergibt sich bei der Herstellung der intumeszierenden Brandschutz-Abdichtung augenscheinlich die Problematik, dass die größeren Partikel durch die auftretenden Scherkräfte beim Einbringen der Brandschutzadditive in die Polymermatrices durch Mischprozesse im Vergleich zu kleineren Graphitpartikeln leichter geschädigt und abgebaut werden können.

Die Folgen sind üblicherweise ein Zerbrechen der Graphitpartikel mit einer damit einhergehenden Korrosion an Maschinen und Werkzeugen durch die aus den Blähgraphitpartikeln freigesetzte Säure, eine unerwünschte Reaktion der freigesetzten Säure mit anderen Formulierungsbestandteilen sowie eine Beeinträchtigung des Expansionsverhaltens.

In EP 1 489 136 A1 wird ein Lösungsansatz beschrieben, um die genannten Probleme zu umgehen. Dadurch sollen sich die Onset-Temperatur der Graphit-Interkalationsverbindungen reduzieren und das Expansionsvolumen und die Expansionsgeschwindigkeit im Bereich der Onset-Temperatur steigern lassen.

Dies sei zu erreichen, indem bei der Herstellung der Blähgraphite Metallhalogenide und ein Nitroalkan der allgemeinen Formel CH₃(CH₂)ₙNO₂, vorzugsweise Nitromethan, zusätzlich zur entsprechenden Säure ein- bzw. angelagert werden.

Es ergeben sich im Zusammenhang mit diesem Lösungsansatz jedoch Probleme. Die Modifizierung des Blähgraphits durch Metallhalogenide ist unter umwelttechnischen Aspekten für eine entsprechende Produktion nicht geeignet, da bei der Herstellung eines solchen modifizierten Graphits unter Verwendung von Metallhalogeniden mehr als die doppelte Menge an schwermetallhaltigen Halogeniden pro Tonne Naturgraphit benötigt werden würde. Der Einsatz von Nitroalkanen der allgemeinen Formel CH₃(CH₂)ₙNO₂ ist aufgrund ihrer brandfördemden Eigenschaften für eine Modifizierung von Blähgraphiten, die in entsprechenden Brandschutz-Abdichtungen eingesetzt werden sollen, nachteilig.

EP 1 669 490 A1 beschreibt eine flammfeste Folie und daraus geformte Gegenstände. EP 0 354 632 A2 beschreibt feuergeschützte geschäumte Kunststoffmaterialien und Füllstoffzusammensetzungen. US 4,686,244 beschreibt intumeszierende, schäumbare Zusammensetzungen als Flamm- und Rauchbarriere.

Es war daher die primäre Aufgabe der vorliegenden Erfindung, eine Brandschutzmischung zur Herstellung eines intumeszierenden Brandschutzartikels sowie entsprechende intumeszierende Brandschutzartikel anzugeben, mit der bzw. denen es im Brandfall gelingt, auch bei niedrigeren Temperaturen und/oder bei ungünstigen Bedingungen der Wärmeübertragung auf die Brandschutzmischung bzw. den intumeszierenden Brandschutzartikel die Abdichtung bzw. den Verschluss einer Öffnung in Wänden, Böden und/oder Decken von Gebäuden ohne Zusatz von Metallhalogeniden deutlich zu verbessern.

Vorzugsweise sollen eine Brandschutzmischung bzw. entsprechende intumeszierende Brandschutzartikel angegeben werden, die sich besonders gut zur Abdichtung von Durchführungen für Rohre und/oder Kabel(-stränge) eignen. Vorzugsweise sollen durch die vorliegende Erfindung auch größere Öffnungen, z.B. für dickwandigere Rohre mit großem Rohrquerschnitt, sicher abgedichtet werden.

Des Weiteren sollte mit der vorliegende Erfindung die Verwendung einer erfindungsgemäßen Brandschutzmischung zur Herstellung eines (vorzugsweise erfindungsgemäßen) intumeszierenden Brandschutzartikels sowie ein entsprechendes Verfahren zur Herstellung einer solchen erfindungsgemäßen Brandschutzmischung angegeben werden.

Zudem sollte ein Verfahren zur Abschottung von brennbaren Rohren bzw. von Kabeln angegeben werden.

Weitere Aufgabenstellungen, die der vorliegenden Erfindung zugrunde liegen, ergeben sich aus den nachfolgenden Ausführungen und den beigefügten Patentansprüchen.

Gemäß EP 1 489 136 A1 und DE 101 62 532 C1 wird eine Verbesserung des Expansionsverhaltens alleinig über eine Optimierung der Expansionsparameter des eingesetzten Blähgraphits zu erreichen gesucht. Im Gegensatz dazu geht die vorliegende Erfindung von dem Ansatz aus, dass sämtliche Parameter des Gesamtssystems, d. h. der gesamten Brandschutzmischung bzw. des gesamten intumeszierenden Brandschutzartikels, für die gewünschte Brandschutz-Anwendung relevant sind.

Dementsprechend betrifft die vorliegende Erfindung gemäß einem primären Aspekt eine
(a) Brandschutzmischung zur Herstellung eines intumeszierenden Brandschutzartikels, umfassend
   oder einen
(b) intumeszierenden Brandschutzartikel, umfassend
ein Matrixmaterial, in das die folgenden Bestandteile eingebettet sind:
(i) intumeszierender Blähgraphit,
(ii)
   (A) intumeszierende, alkangefüllte Mikrokapseln,
      oder
   (B) ein oder mehrere verkapselte Stickstoff-abspaltende und/oder Kohlendioxid-abspaltende Treibmittel (z.B. Porofor®, Kenitron® und Ficel® der Firma Lanxess; Azodicarbonsäurediamid als Stickstoff-abspaltendes Treibmittel, etc.)
(iii) ein oder mehrere Flammschutzmittel ausgewählt aus der Gruppe bestehend aus Ammoniumpolyphosphate und
   gegebenenfalls
(iv) sonstige Bestandteile.

Gemäß einer bevorzugten Ausgestaltung betrifft die vorliegende Erfindung eine (a) Brandschutzmischung zur Herstellung eines intumeszierenden Brandschutzartikels (wie oben beschrieben) oder einen (b) intumeszierenden Brandschutzartikel (wie oben beschrieben), wobei Bestandteil (ii) aus intumeszierenden, alkangefüllten Mikrokapseln besteht.

Der vorliegenden Erfindung liegt eine Optimierung der Expansionsparameter des Gesamtsystems zugrunde, die vorzugsweise durch die Kombination mindestens zweier unterschiedlicher intumeszierender Additive, wie insbesondere (i) intumeszierender Blähgraphit und (ii) (A) intumeszierende, alkangefüllte Mikrokapseln bzw. (ii) (B) ein oder mehrere verkapselte Stickstoff-abspaltende und/oder Kohlendioxid-abspaltende Treibmittel, erreicht wird.

Es war dabei besonders überraschend, dass sich durch eine solche Kombination, insbesondere durch eine Kombination von (i) Blähgraphit und (ii) (A) intumeszierenden, alkangefüllten Mikrokapseln (als zusätzliche Treibmittel) die Expansionsparameter der Brandschutzmischung bzw. des Brandschutzartikels derart verbessern lassen, dass es im Brandfall gelingt, auch bei niedrigeren Temperaturen und bei ungünstigen Bedingungen der Wärmeübertragung auf die Brandschutzmischung bzw. den intumeszierenden Brandschutzartikel Öffnungen in Wänden, Böden und/oder Decken, insbesondere auch größere Öffnungen, z. B. für dickwandigere Rohre mit großem Rohrquerschnitt, sicher abzudichten.

Gemäß der vorliegenden Erfindung umfasst eine erfindungsgemäße Brandschutzmischung bzw. ein erfindungsgemäßer intumeszierender Brandschutzartikel ein Matrixmaterial, in das die beschriebenen Bestandteile eingebettet sind. Ein Matrixmaterial ist im Rahmen des vorliegenden Textes ein Material, in das andere Bestandteile eingebettet sind, d.h. ein Material, das die (erfindungsgemäß einzusetzenden) Bestandteile umschließt bzw. umfasst. Vorzugsweise basiert das Matrixmaterial auf einem Polymer oder einem polymerisierbaren Material. Vorzugsweise basiert das Matrixmaterial auf einem Polymer und enthält als Polymer mindestens einen Vertreter der natürlichen und synthetischen Kautschuke, Polyurethane, Polyvinylacetate, Polyvinylether, Polyvinylpropionate, Polystyrole, Silikone und/oder Polymethacrylate.

Gemäß einer bevorzugten Ausführungsform handelt es sich bei dem Matrixmaterial um eine Polymermatrix bestehend aus einem Ein-Komponenten-System (z.B. auf Basis von mit Luftfeuchtigkeit aushärtendem PU-Prepolymer) oder einem Zwei-Komponenten-Gießsystem (z.B. im Prepolymerverfahren oder im sogenannten One-Shot-Verfahren hergestellt).

Gemäß einer bevorzugten Ausführungsform handelt es sich bei dem Matrixmaterial um eine Polymermatrix bestehend aus einem Zwei-Komponenten-Gießsystem auf Basis von Polyurethan, hergestellt im sogenannten One-Shot-Verfahren. Die erste Komponente für den Aufbau der Polyurethanmatrix besteht hierbei aus einem Polyolgemisch, das neben einem oder mehreren Polyolen vorzugsweise wenigstens einen kurzkettigen Vernetzer und/oder Kettenverlängerer auf Alkoholbasis enthält. Weiterhin enthält diese erste Komponente üblicherweise die erfindungsgemäß einzusetzenden Bestandteile (i) intumeszierender Blähgraphit, (ii) (A) intumeszierende, alkangefüllte Mikrokapseln bzw. (ii) (B) ein oder mehrere verkapselte Stickstoff-abspaltende und/oder Kohlendioxid-abspaltende Treibmittel, ein oder mehrere wie weiter oben als Bestandteil (iii) beschriebene Flammschutzmittel sowie gegebenenfalls (iv) sonstige Bestandteile wie beispielsweise Katalysatoren, Pigmentfarbstoffe und/oder weitere Additive (z.B. Alterungsschutzmittel, Antioxidantien, Stabilisatoren, etc.). Die zweite Komponente für den Aufbau der Polyurethanmatrix basiert auf Di- oder Polyisocyanaten. Durch das Vermischen der zweiten Komponente mit der ersten Komponente kommt es zu einer Reaktion, bei der das Reaktionsgemisch zu einem Polyurethansystem aushärtet.

Vorzugsweise sind das eine oder die mehreren Polyole der ersten Komponente hierbei ausgewählt aus Polyolen der Gruppe Polyester, Polyether, Polycarbonate und/oder Polycaprolactone. Abhängig von Kettenlänge und Anzahl der Verzweigungen im Polyol können mechanische Eigenschaften beeinflusst werden.

Vorzugsweise weist das zumindest eine Polyol eine Molmasse im Bereich von 500 bis 6000 g / mol auf, wobei eine Molmasse im Bereich von 1000 bis 3000 g / mol besonders bevorzugt ist.

Weiterhin besitzt das zumindest eine Polyol vorzugsweise eine OH-Funktionalität im Bereich von 2 bis 3, wobei jedoch auch höhere Funktionalitäten einsetzbar sind.

Der zumindest eine kurzkettige, vorzugsweise bi- oder mehrfunktionelle, alkoholische Kettenverlängerer bzw. Vernetzer wird vorzugsweise ausgewählt aus der Gruppe von 1,4-Butandiol (bifunktionell, M = 90,1 g / mol), 1,6-Hexandiol (bifunktionell, M = 118,2 g / mol), Ethylenglykol (bifunktionell, M = 62,1 g / mol), Propandiol (bifunktionell, M = 76,1 g / mol), Glycerin (trifunktionell, M = 92,1 g / mol), Di-Trimethylolpropan (Di-TMP, tetrafunktionell, M = 250,3 g / mol), Trimethylolpropan (TMP, trifunktionell, M = 134,2 g / mol) und/oder Cyclohexandimethanol (bifunktionell, M = 144,2 g / mol). Als besonders vorteilhaft hat sich ein Gemisch aus Vemetzem erwiesen, welches bezogen auf das Gesamtgewicht des Vernetzergemisches 30 bis 90 Gew.-% bifunktionelle Kettenverlängerer, vorzugsweise 1,4-Butandiol, und 10 bis 70 Gew.-% trifunktionelle Vernetzer, vorzugsweise Trimethylolpropan, umfasst.

Die zweite Komponente, welche auf Di- oder Polyisocyanaten basiert, umfasst zumindest ein Di- oder Polyisocyanat, vorzugsweise ausgewählt aus der Gruppe bestehend aus 4,4'-Diphenylmethandiisocyanat (MDI, bifunktionell, M = 250,3 g / mol) sowie dessen Isomere, 3,3'-Dimethyldiphenyldiisocyanat (TODI, bifunktionell, M = 264,3 g / mol), Toluylendiisocyanat (TDI, bifunktionell, M = 174,2 g / mol), Naphthalin-1,5-diisocyanat (NDI, bifunktionell, M = 210,2 g / mol), Hexamethylendiisocyanat (HDI, bifunktionell, M = 168,2 g / mol), trifunktionelle Kondensate des Hexamethylendiisocyanats vom Biuret- oder Trimertyp (Isocyanurat), Isophorondiisocyanat (IPDI, bifunktionell, M = 208.3 g / mol) und/oder 4,4'-Dicyclohexylmethandiisocyanat (H₁₂-MDI, bifunktionell, M = 262,4 g / mol), wobei ein Isomerengemisch aus 4,4'-Diphenylmethandiisocyanat und 2,4'-Diphenylmethandiisocyanat in einem isomeren Verhältnis von 50:50 bis 80:20 besonders bevorzugt ist. In eigenen Versuchen haben sich beispielsweise Isocyanate der Suprasec-Serie der Firma Huntsman oder Desmodur VP PU 0129 der Firma Bayer als besonders geeignet erwiesen.

Im Rahmen der vorliegenden Erfindung stellen sowohl eine Komponente des gemäß einer bevorzugten Ausführung der vorliegenden Erfindung beschriebenen Zwei-Komponenten-Gießsystems, die die Bestandteile (i), (ii), (iii) sowie gegebenenfalls (iv) enthält, als auch eine Mischung aus erster und zweiter Komponente des Zwei-Komponenten-Gießsystems jeweils eine erfindungsgemäße Brandschutzmischung dar.

Für die Zwecke der vorliegenden Erfindung ist es besonders vorteilhaft, wenn eine erfindungsgemäße Brandschutzmischung oder ein erfindungsgemäßer Brandschutzartikel einen niedrigen Wassergehalt, vorzugsweise einen Wassergehalt von maximal 0,1 Gew.-% bezogen auf das Gesamtgewicht der erfindungsgemäßen Brandschutzmischung bzw. des Brandschutzartikels, aufweist. Gegebenenfalls vorhandene Restfeuchte, wie beispielsweise aus einem Polyol-Gemisch der ersten Komponente gemäß einer bevorzugten Ausführungsform eines Matrixmaterials oder aus dem erfindungsgemäß einzusetzenden intumeszierenden Blähgraphit, kann zum Beispiel mit einem Di-oder Polyisocyanat der zweiten Komponente unter Freisetzung von Kohlendioxid reagieren, was zu einem Aufblähen der Mischung während dem Herstellungsprozess führen kann. Daher wird einer erfindungsgemäßen Brandschutzmischung zur Herstellung eines intumeszierenden Brandschutzartikels vorzugsweise ein Wasseradsorber wie Baylith® T zugesetzt. Dadurch kann ein Aufblähen der Mischung während des Herstellungsprozesses reduziert bzw. verhindert werden. Baylith® T ist ein Molekularsieb auf Na-A-Zeolith-Basis mit einer Porenweite von etwa 4 Ångström. Dies ist beispielsweise als UOP T-Pulver (z.B. Firma Obermeier) kommerziell erhältlich. Dementsprechend stellt ein Wasseradsorber in einer weiteren bevorzugten Ausgestaltung einer erfindungsgemäßen (a) Brandschutzmischung oder eines erfindungsgemäßen (b) intumeszierenden Brandschutzartikels einen (iv) sonstigen Bestandteil des umfassten Matrixmaterials dar.

Besonders geeignet ist eine bevorzugte Ausführungsform einer (a) erfindungsgemäßen Brandschutzmischung bzw. eines (b) erfindungsgemäßen Brandschutzartikels, wobei der (i) intumeszierende Blähgraphit eine maximale freie Expansion von 150 bis 500 ml / g, vorzugsweise von 350 bis 450 ml / g, besitzt.

Gemäß einer weiteren bevorzugten Ausführungsform einer (a) erfindungsgemäßen Brandschutzmischung bzw. eines (b) erfindungsgemäßen Brandschutzartikels besitzt der (i) intumeszierende Blähgraphit vorzugsweise eine Teilchengröße im Bereich von 150 bis 500 µm, besonders bevorzugt im Bereich von 300 bis 500 µm. Da der Blähgraphit üblicherweise gesiebt wird, um die gewünschte Teilchengröße zu erhalten, liegen im Einzelfall neben den Blähgraphitteilchen bevorzugter Teilchengröße auch Blähgraphitteilchen kleinerer Teilchengröße vor.

Ein erfindungsgemäß einzusetzender (i) intumeszierender Blähgraphit weist zudem vorzugsweise einen, zwei oder sämtliche der folgenden Expansionsparameter auf:
- ein maximal erzielbares Expansionsvolumen von 550 % / mg oder mehr,
- eine Expansionsgeschwindigkeit von 20 % / °C oder mehr im Bereich der Onset-Temperatur
- einen mittleren Ausdehnungskoeffizienten α zwischen Onset-Temperatur und T₁₀₀ von 0,1 K⁻¹ oder mehr.

Blähgraphit-Typen, die im Rahmen der vorliegenden Erfindung eingesetzt werden können, besitzen vorzugsweise eine Onset-Temperatur in einem Bereich von 140 bis 180 °C, vorzugsweise in einem Bereich von 140 bis 160°C. Blähgraphite mit interkalierter Schwefelsäure weisen, wie weiter oben beschrieben, üblicherweise eine Onset-Temperatur von etwa 200 °C auf und sind daher für die Zwecke der vorliegenden Erfindung und vor allem für ein frühes bzw. schnelles Aufschäumen bei niedrigen Temperaturen weniger bevorzugt. Blähgraphite, die jedoch auf sogenannter modifizierter Schwefelsäure als interkaliertem Reagenz basieren, sind dagegen für die Zwecke der vorliegenden Erfindung besonders bevorzugt. Unter modifizierter Schwefelsäure sind im Rahmen des vorliegenden Textes zum Beispiel Schwefelsäure enthaltende Mischungen zu verstehen, die neben dem zu interkalierenden Reagenz (Schwefelsäure) spezielle Beimischungen (z.B. spezielle Oxidationsmittel) enthalten, die bei der Herstellung intumeszierender Blähgraphite verwendet werden, um die Expansionseigenschaften des entsprechenden Blähgraphits zu beeinflussen. Alternativ können übliche Blähgraphite mit Schwefelsäure als interkaliertem Reagenz nach dem Interkalieren der Säure entsprechend den gewünschten Expansionseigenschaften, insbesondere entsprechend der gewünschten Onset-Temperatur, modifiziert werden, beispielsweise durch Waschen der Schwefelsäure-Graphitpartikel mit einer wässrigen Waschflüssigkeit, die Verbindungen enthält, welche die Expansionseigenschaften des Blähgraphits modifizieren (vergleiche hierzu beispielsweise DE 102 56 963 A1). Solche modifizierte Blähgraphite oder Blähgraphite, die auf sogenannter modifizierter Schwefelsäure als interkaliertem Reagenz basieren, weisen vorzugsweise eine Onset-Temperatur im Bereich von 140 bis 180°C, besonders bevorzugt im Bereich von 140 bis 160°C, auf und sind daher für die Zwecke der vorliegenden Erfindung besonders bevorzugt einzusetzen.

Alternativen zu modifizierter Schwefelsäure als zu interkalierendem Reagenz sind Essigsäure und Salpetersäure. Die Interkalation von Essigsäure oder Salpetersäure führt zu Blähgraphiten mit einer Onset-Temperatur von etwa 150 bis 160 °C. Diese beiden Säuren führen allerdings zu Expansionsparametem des resultierenden Blähgraphits, die den Erfordernissen reaktionsschneller Systeme im Einzelfall nicht genügen. Der Einsatz modifizierter Schwefelsäure ist daher besonders bevorzugt.

Der pH-Wert des einzusetzenden Blähgraphits ist vorzugsweise neutral; Säurereste können gegebenenfalls Werkzeuge und/oder Kunststoffe des Gesamtssystems beschädigen.

Beispielsweise hat sich ein Blähgraphit-Typ der Fa. Nordmann Rassmann (Nord-Min® 351) für die Zwecke der vorliegenden Erfindung als besonders geeignet erwiesen. Dieser Blähgraphit-Typ besitzt eine Onset-Temperatur von etwa 150 bis 160 °C. Die Parameter dieses Blähgraphit-Typs sind für die Zwecke der vorliegenden Erfindung besonders geeignet. Zudem ist es vorteilhaft, dass der besagte bevorzugte Blähgraphit-Typ einen Graphitteilchen-Durchmesser (Teilchengröße) von etwa 300 µm aufweist. Dieser Blähgraphit-Typ weist zudem, wie es auch allgemein im Rahmen der vorliegenden Erfindung bevorzugt ist, (modifizierte) Schwefelsäure als interkaliertes Reagenz auf. Die Reinheit dieses Graphits liegt bei mehr als 99 %, der Aschegehalt liegt bei etwa 0,9 %.

Die (ii) (A) intumeszierenden, alkangefüllten Mikrokapseln sind im Rahmen des vorliegenden Textes als Mikrokapseln (Mikrosphären) zu verstehen, die eine Außenhülle aus einem schmelzbaren Material (vorzugsweise einem KunststoffMaterial) aufweisen und im Inneren ein (vorzugsweise niedrig siedendes) Alkan als Treibmittel enthalten. Prinzipiell können je nach Anwendung (z. B. reaktionsschnelles oder -langsameres Schäumen) Isobutan, n-Butan, Isopentan, n-Pentan, Isohexan oder höhere Homologe als Alkan verwendet werden.

Alternativ zu den intumeszierenden, alkangefüllten Mikrokapseln werden im Rahmen der vorliegenden Erfindung wie oben beschrieben vorzugsweise ein oder mehrere verkapselte Stickstoff-abspaltende und/oder Kohlendioxid-abspaltende Treibmittel (z.B. Porofor®, Kenitron® und Ficel® der Firma Lanxess; Azodicarbonsäurediamid als Stickstoff-abspaltendes Treibmittel, etc.) eingesetzt. Die Hülle dieses bzw. dieser verkapselten Treibmittel besteht aus einem schmelzbaren Material, vorzugsweise einem Kunststoffmaterial.

Nicht gekapselte Treibmittel sind für die Zwecke der vorliegenden Erfindung nach eigenen Untersuchungen ineffizient, da bei Erwärmung die (gasförmigen) Zerfallsprodukte der Treibmittel durch die poröse Struktur einer aufblähenden Brandschutzmischung bzw. eines intumeszierenden Brandschutzartikels entweichen können. Die erfindungsgemäß einzusetzenden Mikrokapseln bzw. verkapselten Treibmittel dagegen erlauben ein gleichmäßiges, dreidimensional gerichtetes Aufschäumen, ohne dass die Gase vorab entweichen können. Dadurch wird das Material, d.h. eine entsprechende Brandschutzmischung bzw. ein entsprechender intumeszierender Brandschutzartikel, optimal aufgetrieben.

Die efindungsgemäß einzusetzenden intumeszierenden, alkangefüllten Mikrokapseln besitzen bevorzugt eine Außenhülle aus Latex, Polyvinylidenchlorid, Polyvinylacetat oder Polyacrylverbindungen. Besonders bevorzugt sind Mikrokapseln, deren Kunststoffhülle aus einem Copolymer besteht, welches vorzugsweise auf den Monomeren Vinylidenchlorid, Acrylnitril und Methylmethacrylat basiert bzw. aus diesen Monomeren aufgebaut ist (wie beispielsweise Expancel-Mikrokapseln der Firma Akzo Nobel).

Vorzugsweise beträgt der Durchmesser erfindungsgemäß einzusetzender intumeszierender, alkangefüllter Mikrokapseln 6 bis 45 µm, besonders bevorzugt 10 bis 25 µm.

Weiter bevorzugt ist es, wenn die erfindungsgemäß einzusetzenden intumeszierenden, alkangefüllten Mikrokapseln einen Feststoffgehalt von 55 bis 80 %, vorzugsweise von 60 bis 75 %, besitzen, vorzugsweise in einer vorstehend als bevorzugt bezeichneten Ausgestaltung der vorliegenden Erfindung.

Besonders bevorzugt erfindungsgemäß einzusetzende intumeszierende, alkangefüllte Mikrokapseln bzw. verkapselte Stickstoff-abspaltende und/oder Kohlendioxid-abspaltende Treibmittel besitzen eine Onset-Temperatur in einem Bereich von 75 bis 170 °C, vorzugsweise in einem Bereich von 95 bis 130 °C.

Gemäß den oben genannten bevorzugt einzusetzenden Bestandteilen betrifft ein weiterer Aspekt der vorliegenden Erfindung eine (a) Brandschutzmischung bzw. einen (b) intumeszierenden Brandschutzartikel (wie jeweils oben definiert), wobei die Onset-Temperatur des (i) intumeszierenden Blähgraphits in einem Bereich von 140 bis 180 °C, vorzugsweise in einem Bereich von 140 bis 160 °C, und/oder die Onset-Temperatur der (ii) (A) intumeszierenden, alkangefüllten Mikrokapseln bzw. des (ii) (B) einen oder der mehreren verkapselten Stickstoff-abspaltenden und/oder Kohlendioxid-abspaltenden Treibmittel in einem Bereich von 75 bis 170 °C, vorzugsweise in einem Bereich von 95 bis 130 °C, liegt.

Besonders bevorzugt ist es dabei, wenn die Onset-Temperatur des (i) intumeszierenden Blähgraphits in einem Bereich von 140 bis 160 °C und die Onset-Temperatur der (ii) (A) intumeszierenden, alkangefüllten Mikrokapseln bzw. des (ii) (B) einen oder der mehreren verkapselten Stickstoff-abspaltenden und/oder Kohlendioxid-abspaltenden Treibmittel in einem Bereich von 95 bis 130 °C, liegt.

Gemäß einem weiteren Aspekt der vorliegenden Erfindung ist es bevorzugt, wenn die Onset-Temperaturen der intumeszierenden, alkangefüllten

Mikrokapseln bzw. des einen oder der mehreren verkapselten Stickstoff-abspaltenden und/oder Kohlendioxid-abspaltenden Treibmittel und des Blähgraphits in einer erfindungsgemäßen Ausführungsform um etwa 30 bis 60 C, vorzugsweise um etwa 40 °C, auseinanderliegen, vorzugsweise in einer vorstehend als bevorzugt bezeichneten Ausgestaltung der vorliegenden Erfindung. Bevorzugt ist dabei die Onset-Temperatur der (ii) (A) intumeszierenden, alkangefüllten Mikrokapseln bzw. der verkapselten Stickstoff-abspaltenden und/oder Kohlendioxid-abspaltenden Treibmittel niedriger.

Dementsprechend wird gemäß diesem Aspekt eine (a) Brandschutzmischung bzw. ein (b) intumeszierender Brandschutzartikel (wie oben definiert) angegeben, wobei die Onset-Temperatur des (i) intumeszierenden Blähgraphits um 30 bis 60 °C, vorzugsweise um 40 °C, höher ist als die Onset-Temperatur der (ii) (A) intumeszierenden, alkangefüllten Mikrokapseln bzw. des (ii) (B) einen oder der mehreren verkapselten Stickstoff-abspaltenden und/oder Kohlendioxid-abspaltenden Treibmittel.

Im Brandfall setzt der Blähvorgang des entsprechenden Blähgraphits somit erst nach dem Expansionsbeginn der erfindungsgemäß einzusetzenden intumeszierenden, alkangefüllten Mikrokapseln bzw. der verkapselten Stickstoff-abspaltenden und/oder Kohlendioxid-abspaltenden Treibmittel ein, so dass die Schäumeffekte synergistisch wirken können.

Im Brandfall kommt es zu einem Erweichen der Außenhülle der intumeszierenden, alkangefüllten Mikrokapseln bzw. der verkapselten Stickstoff-abspaltenden und/oder Kohlendioxid-abspaltenden Treibmittel unter gleichzeitiger Innendruckerhöhung (durch das Verdampfen des Treibmittels sowie die thermische Ausdehnung des Gases). Bevorzugt einzusetzende intumeszierende, alkangefüllte Mikrokapseln blähen sich dabei im Extremfall bis um das Vierzigfache ihres Ursprungsvolumens auf einen Durchmesser von z.B. 240 bis 1800 µm auf.

Bei einer derartigen dreidimensionalen Volumenvergrößerung wird die gesamte Brandschutzmasse, d. h. die erfindungsgemäße Brandschutzmischung bzw. ein erfindungsgemäßer intumeszierender Brandschutzartikel bereits bei niedrigen Temperaturen stark aufgetrieben, wodurch ein reaktionsschnelles Aufschäumen der Brandschutzmischung bzw. des Brandschutzartikels mit einer hohen Geschwindigkeit, einem hohen Volumen und einem hohen Druck ermöglicht wird. Der erfindungsgemäß bevorzugt einzusetzende intumeszierende Blähgraphit reagiert bei weiter steigender Temperatur nach Erreichen seiner entsprechenden Onset-Temperatur und löst dadurch einen zweiten Blähvorgang aus, bei dem sich eine Brandschutzabdichtung in Form einer Intumeszenzschicht bildet.

Bei diesem synergistischen Zusammenwirken werden die Graphitteilchen gewissermaßen zuerst von den expandierenden Mikrokapseln bzw. den verkapselten Treibmitteln "mitgetragen" und blähen erst während dieses Vorgangs selbst auf, um eine Intumeszenzschicht zu bilden. Dadurch wird eine Verbesserung des Expansionsverhaltens des Gesamtsystems für die Zwecke der vorliegenden Erfindung im Sinne der oben genannten Aufgabenstellung(en) erreicht. Die Brandschutzmasse bzw. der Brandschutzartikel wird also vorzugsweise durch die Wirkung der intumeszierenden, alkangefüllten Mikrokapseln bzw. der verkapselten Stickstoff-abspaltenden und/oder Kohlendioxid-abspaltenden Treibmittel "vorexpandiert", worauf der intumeszierende Blähgraphit die aufgetriebene, vorexpandierte Masse bzw. den Artikel mit einer schützenden Intumeszenzschicht umgibt.

Eine größere als die bevorzugt genannte Differenz zwischen den Onset-Temperaturen dagegen trennt die beiden Blähvorgänge zeitlich stärker voneinander ab, so dass die beiden Blähvorgänge im Extremfall zeitlich nicht mehr überlappen, was einem schnellen Expandieren bei niedriger Onset-Temperatur entgegenwirkt. Die aufgetriebenen Mikrokapseln bzw. die verkapselten Treibmittel können durch die Hitze des Feuers zersetzt werden, bevor der entsprechende Blähgraphit zu intumeszieren beginnt.

Eine Kombination aus Blähgraphit (als primäres Intumeszenzmaterial) und Mikrosphären, bzw. Mikrokapseln, welche Isobutan enthalten, wird im Zusammenhang mit einem zweistufigen Blähverhalten in US 5,132,054 beschrieben. Zweck der beigemischten Mikrokapseln ist dabei ein erster Expansionsschritt bei einer Onset-Temperatur von etwa 99 °C (210 °F). Erst im Anschluss erfolgt ein durch das primäre Intumeszenzmaterial bedingter zweiter Expansionsschritt bei Erreichen einer Onset-Temperatur von etwa 163 °C (325 °F). Anders als zur Optimierung der Expansionsparameter, wie in der vorliegenden Erfindung der Fall, dienen die in US 5,132,054 beschriebenen aufgeblähten Mikrokapseln aber der Formgebung der intumeszierten Brandschutzmasse sowie einem kontrollierten Aufschäumen, um einen Zerfall der Brandschutzabdichtung zu verhindern. Die beiden Onset-Temperaturen liegen um etwa 64 °C auseinander.

Die Bestandteile der erfindungsgemäß vorliegenden Brandschutzmischung bzw. eines erfindungsgemäßen intumeszierenden Brandschutzartikels erfüllen daher im Rahmen der vorliegenden Erfindung primär eine andere Aufgabe. Zudem ist die gemäß US 5,132,054 gewählte Differenz der beiden Onset-Temperaturen der unterschiedlichen intumeszierenden Bestandteile größer als eine erfindungsgemäß zu bevorzugende.

In einer besonders bevorzugten Ausführungsform handelt es sich bei den (ii) (A) intumeszierenden, alkangefüllten Mikrokapseln, welche in einer erfindungsgemäßen Brandschutzmischung oder einem erfindungsgemäßen intumeszierenden Brandschutzartikel (wie oben beschrieben) enthalten sind, um Isopentan-gefüllte Mikrokapseln.

Wie bereits erwähnt, können je nach Anwendung unterschiedliche Alkane verwendet werden. Die Expansionsparameter der intumeszierenden, alkangefüllten Mikrokapseln hängen unter anderem von dem eingekapselten Alkan und dem Material der Außenhülle ab. Intumeszierende Mikrokapseln, welche Isopentan als entsprechendes Treibmittel enthalten, sind für die Zwecke der vorliegenden Erfindung jedoch besonders bevorzugt. Bevorzugt sind zudem intumeszierende, Isopentan-gefüllte Mikrokapseln, die eine Onset-Temperatur im Bereich von etwa 124 bis 134 °C besitzen. Gemäß den weiter oben beschriebenen Vorraussetzungen bieten solche zu bevorzugenden Mikrokapseln ideale Eigenschaften für die Zwecke der vorliegenden Erfindung.

Vorzugsweise besitzen die (ii) (A) intumeszierenden, alkangefüllten Mikrokapseln ihr maximales Expansionsvolumen bei einer Temperatur im Bereich von 115 bis 230 °C, vorzugsweise im Bereich von 135 bis 170 °C (T₁₀₀). Das Volumen der Mikrokapseln wird bei der Expansion im Extremfall um bis das Vierzigfache des Ausgangsvolumens vergrößert.

In eigenen Untersuchungen hat sich herausgestellt, dass beispielsweise die sogenannten Expancel^{®}-Mikrokapseln der Typen 551 DU 20, 551 DU 40, 461 DU 40, 051 DU 40, 053 DU 40, 091 DU 80, 920 DUX 40 und 009 DU 80 der Firma Akzo Nobel zum Einsatz für die Zwecke der vorliegenden Erfindung besonders gut geeignet sind. Die Typen-Bezeichnungen entsprechen dabei dem Stand vom 31.12.2007.

Obwohl die (ii) (A) intumeszierenden, alkangefüllten Mikrokapseln im Rahmen der vorliegenden Erfindung primär eine andere Aufgabe erfüllen, konnte im Rahmen eigener Untersuchungen auch für die erfindungsgemäß einzusetzenden intumeszierenden, alkangefüllten Mikrokapseln bestätigt werden, dass diese in den oben genannten Ausführungsformen einer erfindungsgemäßen Brandschutzmischung bzw. eines erfindungsgemäßen intumeszierenden Brandschutzartikels im Brandfall zu einer besseren Formgebung und einer erhöhten Standfestigkeit der Brandschutzmischung bzw. des Brandschutzartikels führen (vgl. US 5,132,054). Bei herkömmlichen Brandschutzmischungen ohne intumeszierende, alkangefüllte Mikrokapseln ist im Brandfall nach dem Aufblähen der Graphitpartikel und der damit verbundenen teilweisen Zersetzung der die Graphitpartikel umfassenden Matrix der Zusammenhalt der aufgeblähten Brandschutzmischung häufig beeinträchtigt, so dass der zuerst gebildete Rohrverschluss bzw. die Brandschutzschicht durch thermische Luftströmungen oder ähnliche Effekte leicht zerfallen kann. Durch die im Brandfall schmelzenden Hüllen der Mikrokapseln dagegen entsteht ein Binder, der die dann aufblähenden Graphitpartikel zusammenhält und durch diese seinerseits vor Zersetzung geschützt wird. Das Resultat ist eine Intumeszenzschicht mit herausragender Standhaftigkeit im Brandfall.

Wie bereits mehrfach erwähnt, besteht Bestandteil (iii) einer erfindungsgemäßen Brandschutzmischung bzw. eines erfindungsgemäßen intumeszierenden Brandschutzartikels aus einem oder mehreren Flammschutzmitteln ausgewählt aus der Gruppe bestehend aus Ammoniumpolyphosphate. Die genannten Flammschutzmittel hemmen bzw. verhindern im Brandfall ein Abbrennen des die Bestandteile (i) bis (iii) bzw. (iv) umfassenden Matrixmaterials. Ohne entsprechende Flammschutzmittel kann sich das Matrixmaterial entzünden und abbrennen. Dadurch besteht die Gefahr, dass das Feuer aufgrund des nicht ausreichend geschützten Matrixmaterials durch die sich gebildete Dämm- bzw. Intumeszenzschicht hindurchwandem kann, da in dieser brennbare Komponenten (Kunststoff) in größerer Menge enthalten sind. Zudem kann der Brandherd weiter mit Sauerstoff versorgt werden, da durch die "undichte", geblähte Dämmschicht Luft an das Matrixmaterial herankommen kann. Dies kann zum Durchbrennen der Dämmschicht führen.

Es ist daher erfindungsgemäß vorgesehen, die entsprechende Brandschutzmischung bzw. einen entsprechenden intumeszierenden Brandschutzartikel mit dem oben erwähnten Flammschutzmittel zu versehen.

Im Zusammenhang mit der vorliegenden Erfindung grundsätzlich geeignete Flammschutzmittel sind vorzugsweise ausgewählt aus der Gruppe der
a) phosphor- bzw. phospathaltigen Flammschutzmittel, insbesondere Phosphatester, Phosphate, Phosphonate, Phosphinate und Ammoniumpolyphosphate,
b) halogenhaltigen Flammschutzmittel, insbesondere bromhaltige Flammschutzmittel, insbesondere bromierte Phosphorsäureester, (cyclo)aliphatische Bromverbindungen (z.B. Hexabromcyclododecan (HBCD)) und aromatische Bromverbindungen (z.B. polybromierte Diphenylether (PBDEs), Tetrabrombisphenal A (TBBPA), bromierte Polystyrole, bromierte Phenole und Tretrabromphthalsäureanhydrid),
c) mineralischen Flammschutzmittel, insbesondere Aluminiumhydroxid (ATH) und Magnesiumhydroxid (MDH),
d) stickstoffhaltigen Flammschutzmittel, insbesondere Melamin, Melaninderivate (z.B. Melaminpolyphosphat und Melamincyanurat) und Melaminhomologe,
e) borhaltigen Flammschutzmittel, insbesondere Borax und Zinkborat,
f) Schichtsilikate auf Basis von Aluminiumsilikat-Tonmineralien, insbesondere Montmorillonit.

Es hat sich in eigenen Untersuchungen herausgestellt, dass für die Zwecke der vorliegenden Erfindung der Einsatz von Ammoniumpolyphosphat(en) besonders vorteilhaft und demnach erfindungsgemäß zu wählen ist. Ammoniumpolyphosphate besitzen beispielsweise gegenüber mineralischen Flammschutzmitteln wie Aluminiumhydroxid oder im speziellen gegenüber Montmorillonit einen höheren Wirkungsgrad und können daher in geringeren Mengen eingesetzt werden. Zudem sind Ammoniumpolyphosphate selbst leicht intumeszierend und können so den Blähvorgang unterstützen. Ammoniumpolyphosphat wird im Brandfall in Ammoniakgas, welches die Flammen ersticken soll, und in Phosphorsäure, welche eine kohlenstoffhaltige Kruste bildet, die das Ausdampfen brennbarer Substanzen aus dem Matrixmaterial verhindert, gespalten. In eigenen Versuchen hat sich beispielsweise ein Flammschutzmittel auf Basis von Ammoniumpolyphosphaten der Firma Thor Chemie GmbH (AFLAMMANN TL1017) als besonders vorteilhaft erwiesen.

Halogenhaltige Flammschutzmittel sind dagegen aus umweltschutztechnischen Gründen weniger bevorzugt.

Die vorliegende Erfindung betrifft gemäß einem weiteren Aspekt einen intumeszierenden Brandschutzartikel (wie oben beschrieben), vorzugsweise in einer als bevorzugt bezeichneten Ausgestaltung, wobei der Brandschutzartikel ein Formkörper ist.

Gemäß einer weiteren bevorzugten Ausführungsform umfasst ein erfindungsgemäßer intumeszierender Brandschutzartikel
(b1) eine Gesamtmenge von 10 bis 35 Gew.%, vorzugsweise 20 bis 25 Gew.-%, (i) intumeszierenden Blähgraphits sowie 2 bis 20 Gew.-%, vorzugsweise 5 bis 10 Gew.%, (ii) (A) intumeszierende, alkangefüllte Mikrokapseln,
vorzugsweise 20 bis 25 Gew.-% (i) intumeszierenden Blähgraphits sowie 5 bis 10 Gew.-% (ii) (A) intumeszierende, alkangefüllte Mikrokapseln
oder
(b2) eine Gesamtmenge von 10 bis 35 Gew.-%, vorzugsweise 15 bis 25 Gew.-%, (i) intumeszierenden Blähgraphits sowie maximal 10 Gew.%, vorzugsweise maximal 5 Gew.%, (ii) (A) intumeszierende, alkangefüllte Mikrokapseln,
vorzugsweise 15 bis 25 Gew.-% (i) intumeszierenden Blähgraphits sowie maximal 5 Gew.-% (ii) (A) intumeszierende, alkangefüllte Mikrokapseln,
bezogen auf das Gesamtgewicht des intumeszierenden Brandschutzartikels.

Intumeszierende Brandschutzartikel dieser bevorzugten Ausführungsformen sind für die weiter oben genannten Zwecke der vorliegenden Erfindung besonders vorteilhaft. Mengen an intumeszierenden, alkangefüllten Mikrokapseln oberhalb dieser bevorzugten Mengen können zwar eingesetzt werden, sind aber im Regelfall zu teuer, schäumen unnötig intensiv und verringern aufgrund des erhöhten Anteils an Additiven die mechanischen Eigenschaften des Gesamtsystems.

Ein gemäß Alternative (b1) zusammengesetzter erfindungsgemäßer intumeszierender Brandschutzartikel hat sich insbesondere zur Rohrabschottung für brennbare Rohre als besonders vorteilhaft erwiesen. Eine Zusammensetzung gemäß Alternative (b2) hat sich überraschenderweise für die Zwecke einer Kabelabschottung als besonders vorteilhaft erwiesen.

Weiter bevorzugt ist ein intumeszierender Brandschutzartikel (wie oben beschrieben), welcher gemäß Alternative (b2) eine Gesamtmenge von 10 bis 35 Gew.%, vorzugsweise 15 bis 25 Gew.-% (i) intumeszierenden Blähgraphits sowie maximal 10 Gew.%, vorzugsweise maximal 5 Gew.%, (ii) (A) intumeszierende, alkangefüllte Mikrokapseln,
sowie
als einen sonstigen Bestandteil (iv) eine Gesamtmenge von maximal 10 Gew.-%, vorzugsweise 2 bis 5 Gew.%, Kunststoffpulver
umfasst, jeweils bezogen auf das Gesamtgewicht des intumeszierenden Brandschutzartikels.

Vorzugsweise ist das Kunststoffpulver ein PET-Pulver, ein PP-Pulver oder besteht aus niedrig schmelzenden PU-Materialien oder sonstigen niedrig schmelzenden Kunststoffen. Nicht bevorzugt sind dagegen Kunststoffpulver aus unschmelzbaren Kunststoffen (z.B. Polyvinylalkohol oder Polyacrylnitril) oder zu hoch schmelzenden Kunststoffen.

Das erfindungsgemäß bevorzugt einzusetzende Kunststoffpulver erfüllt im Brandfall eine verklebende Funktion, indem es durch die Hitze schmilzt ohne sich frühzeitig zu zersetzen und eine zähflüssige Schmelze bildet. Die im Brandfall aufblähenden Graphitpartikel des (i) intumeszierenden Blähgraphits schützen den geschmolzenen Kunststoff des Kunststoffpulvers durch einen isolierenden Effekt vor einer Zersetzung durch hohe Temperaturen. Die aufgeblähten Graphitpartikel werden ihrerseits durch die zähflüssige Schmelze miteinander verklebt, was zu einer wesentlich standhafteren Dämm- bzw. Intumeszenzschicht führt. Vorteilhafterweise schützt ein erfindungsgemäß eingesetztes Flammschutzmittel ein solches Kunststoffpulver vor einem (frühzeitigen) Abbrennen. Da der Schmelzpunkt eines solchen Kunststoffpulvers zudem vorzugsweise relativ niedrig ist (z.B. AK-TPU: 135°C), verflüssigt es sich bereits bei relativ geringem Wärmeeintrag vor dem Erreichen der Onset-Temperatur des Blähgraphits. Dadurch wird gewährleistet, dass eine Verklebung der geblähten Graphitpartikel durch das geschmolzene Kunststoffpulver eintritt ohne dass dieses vorher abbrennt.

Gemäß einem weiteren Aspekt der vorliegenden Erfindung wird ein intumeszierender Brandschutzartikel gemäß einer oben beschriebenen Ausführungsform (mit Ausnahme eines intumeszierenden Brandschutzartikels der Zusammensetzung gemäß Alternative (b2)) angegeben, wobei der Brandschutzartikel eine Rohrabschottung für brennbare Rohre oder ein Bestandteil einer solchen Rohrabschottung ist. Alternativ ist ein solcher intumeszierender Brandschutzartikel gemäß einer oben beschriebenen Ausführungsform (mit Ausnahme eines intumeszierenden Brandschutzartikels der Zusammensetzung gemäß Alternative (b1)) eine Kabelabschottung oder ein Bestandteil einer solchen Kabelabschottung.

Eine erfindungsgemäße Brandschutzmischung (wie oben beschrieben) eignet sich besonders gut zur Herstellung eines intumeszierenden Brandschutzartikels. Dementsprechend betrifft ein weiterer Aspekt der vorliegenden Erfindung die Verwendung einer erfindungsgemäßen Brandschutzmischung zur Herstellung eines intumeszierenden Brandschutzartikels, insbesondere eines wie oben beschriebenen erfindungsgemäßen intumeszierenden Brandschutzartikels. Für die Brandschutzmischung bzw. den Brandschutzartikel und deren bevorzugte Ausführungsformen gilt das weiter oben Gesagte entsprechend.

Die vorliegende Erfindung betrifft darüber hinaus auch ein Verfahren zur Herstellung einer erfindungsgemäßen Brandschutzmischung zur Herstellung eines intumeszierenden Brandschutzartikels, insbesondere eines oben beschriebenen erfindungsgemäßen intumeszierenden Brandschutzartikels. Das Verfahren umfasst dabei folgenden Schritt:
- Einbetten der Bestandteile (i), (ii), (iii) sowie gegebenenfalls (iv) sonstiger Bestandteile in ein Matrixmaterial.

Für die bevorzugt einzusetzenden Materialien für das Matrixmaterial, aber auch die Bestandteile (i), (ii), (iii) sowie gegebenenfalls (iv), gilt das weiter oben Gesagte entsprechend. Weitere Ausgestaltungen ergeben sich zudem aus den unten folgenden Ausführungsbeispielen.

Wie bereits erwähnt, eignet sich eine erfindungsgemäße Brandschutzmischung bzw. ein erfindungsgemäßer intumeszierender Brandschutzartikel besonders gut zur Abschottung von brennbaren Rohren oder von Kabeln. Dementsprechend betrifft die vorliegende Erfindung auch ein Verfahren zur Abschottung von brennbaren Rohren oder von Kabeln. Dieses erfindungsgemäße Verfahren umfasst dabei den folgenden Schritt:
- zumindest teilweises Umschließen und/oder in Kontakt bringen eines Rohres oder eines oder mehrerer Kabel mit einer erfindungsgemäßen Brandschutzmischung (wie oben beschrieben) oder einem erfindungsgemäßen intumeszierenden Brandschutzartikel (wie oben beschrieben).

Nachfolgend wird die Erfindung anhand von Ausführungsbeispielen näher erläutert.

### Ausführungsbeispiel 1: Herstellung eines intumeszierenden Brandschutzartikels umfassend 8 Gew.-% Expancel-Mikrokapseln und 25 Gew.-% Blähgraphit

### 1) Herstellung der ersten Komponente einer aus einem Zwei-Komponenten-Gießsystem auf Basis von Polyurethan bestehenden Polymermatrix:

200,0 g eines Polyols vom Typ Desmophen 3426L werden durch Anlegen von Vakuum und gleichzeitigem Erhitzen auf 120 °C entgast bzw. entwässert. Anschließend lässt man auf ca. 80 °C abkühlen und gibt 17,7 g 1,4-Butandiol sowie 11,3 g Trimethylolpropan als Vernetzer hinzu. Nach vollständigem Lösen des Trimethylolpropans lässt man auf Raumtemperatur abkühlen und fügt 0,4 g Dabco MB20 und 1,8 g Dabco NE1070 als Katalysatoren hinzu. Nach Zugabe dieser beiden Katalysatoren werden nacheinander 14,2 g Baylith^{®} T (als Wasseradsorber), 127,6 g AFLAMMAN TL1017 (als Bestandteil (iii)), 56,6 g Expancel-Mikrokapseln (Typ 920 DUX 40) (als Bestandteil (ii)) und 1,8 g Pigmentfarbstoff zugesetzt. Die Bestandteile werden eingemischt und die dabei eingerührte Luft wird durch nachträglich angelegtes Vakuum wieder entfernt. Anschließend wird unter mechanischem Rühren 177,4 g NORD-MIN 351 Blähgraphit (als Bestandteil (i)) hinzugefügt und die hierbei eingerührte Luft erneut durch Vakuum entfernt.

### 2) Herstellen des Zwei-Komponenten-Gießsystems der Polymermatrix auf Basis von Polyurethan zur Herstellung einer Brandschutzbandage (insbesondere zur Rohrabschottung brennbarer Rohre):

Zur Herstellung einer Brandschutzbandage als intumeszierenden Brandschutzartikel wird die unter 1) beschriebene gefertigte erste Komponente des Zwei-Komponenten-Systems mit der zweiten Komponente, 100 g eines Isomerengemisches aus 4,4'-Diphenylmethandiisocyanat und 2,4'-Diphenylmethandiisocyanat im Verhältnis 65:35, gründlich vermischt und in Form gegossen. Das Material besitzt eine Topfzeit im Bereich von etwa 5 bis 10 Minuten, abhängig von der Umgebungs- und Werkzeugtemperatur. Nach etwa 2 bis 3 Stunden kann das Material entformt werden.

In Bezug auf das Gesamtgewicht der Brandschutzbandage umfasst dieser Brandschutzartikel 8 Gew.-% Expancel-Mikrokapseln (als Bestandteil (ii)) sowie 25 Gew.-% intumeszierenden Blähgraphits (als Bestandteil (i)).

### 3) Vergleichsmessungen:

In Schaumhöhemessungen bei einer Temperatur von 500 °C hat sich gezeigt, dass durch Zusatz von 8 Gew.-% Expancel-Mikrokapseln (gemäß der Beschreibung unter 1) und 2)) zu einer Brandschutzmischung zur Herstellung eines intumeszierenden Brandschutzartikels die maximale Schaumhöhe der Brandschutzmischung bzw. des intumeszierenden Brandschutzartikels um den Faktor 1,5 gesteigert werden kann. Blähdruckmessungen bei einer Temperatur von 300 °C ergaben eine Verbesserung um den Faktor 1,6 gegenüber einem identischen Vergleichsmaterial ohne Expancel-Mikrokapsel-Zusatz.

Die Messung der Schaumhöhe erfolgte dabei gemäß den "Zulassungsgrundsätzen für dämmschichtbildende Baustoffe" des DIBt (Deutsches Institut für Bautechnik).

### Ausführungsbeispiel 2: Herstellung eines intumeszierenden Brandschutzartikels umfassend 17 Gew.-% Expancel-Mikrokapseln und 24 Gew.-% Blähgraphit

### 1) Herstellung der ersten Komponente einer aus einem Zwei-Komponenten-Gießsystem auf Basis von Polyurethan bestehenden Polymermatrix:

200,0 g eines Polyols vom Typ Desmophen 3426L werden durch Anlegen von Vakuum und gleichzeitigem Erhitzen auf 120 °C entgast bzw. entwässert. Anschließend lässt man auf ca. 80 °C abkühlen und gibt 17,7 g 1,4-Butandiol sowie 11,3 g Trimethylolpropan als Vernetzer hinzu. Nach dem vollständigen Lösen des Trimethylolpropans lässt man auf Raumtemperatur abkühlen und fügt 0,6 g Dabco MB20 und 2,2 g Dabco NE1070 als Katalysatoren hinzu. Nach Zugabe dieser beiden Katalysatoren werden nacheinander 17,2 g Baylith^{®} T (als Wasseradsorber), 158,2 g AFLAMMAN TL1017 (als Bestandteil (iii)), 149,4 g Expancel-Mikrokapseln (Typ 920 DUX 40) (als Bestandteil (ii)) und 2,2 g Pigmentfarbstoff zugesetzt. Die Bestandteile werden eingemischt und die dabei eingerührte Luft wird durch nachträglich angelegtes Vakuum wieder entfernt. Anschließend wird unter mechanischem Rühren 207,8 g NORD-MIN 351 Blähgraphit (als Bestandteil (i)) hinzugefügt und die hierbei eingerührte Luft erneut durch Vakuum entfernt.

### 2) Herstellen des Zwei-Komponenten-Gießsystems der Polymermatrix auf Basis von Polyurethan zur Herstellung einer Brandschutzbandage (insbesondere zur Rohrabschottung brennbarer Rohre):

Zur Herstellung einer Brandschutzbandage als intumeszierenden Brandschutzartikel wird die unter 1) beschriebene gefertigte erste Komponente des Zwei-Komponenten-Systems mit der zweiten Komponente, 100 g eines Isomerengemisches aus 4,4'-Dippenylmethandiisocyanat und 2,4'-Diphenylmethandiisocyanat im Verhältnis 65:35, gründlich vermischt und in Form gegossen. Das Material besitzt eine Topfzeit im Bereich von etwa 5 bis 10 Minuten, abhängig von der Umgebungs- und Werkzeugtemperatur. Nach etwa 2 bis 3 Stunden kann das Material entformt werden.

In Bezug auf das Gesamtgewicht der Brandschutzbandage umfasst dieser Brandschutzartikel 17 Gew.-% Expancel-Mikrokapseln (als Bestandteil (ii)) sowie 24 Gew.-% intumeszierenden Blähgraphits (als Bestandteil (i)).

### 3) Vergleichsmessungen:

In Schaumhöhemessungen bei einer Temperatur von 500 °C hat sich gezeigt, dass durch Zusatz von 17 Gew.-% Expancel-Mikrokapseln (gemäß der Beschreibung unter 1) und 2)) zu einer Brandschutzmischung zur Herstellung eines intumeszierenden Brandschutzartikels die maximale Schaumhöhe der Brandschutzmischung bzw. des intumeszierenden Brandschutzartikels um den Faktor 2,4 gesteigert werden kann. Blähdruckmessungen bei einer Temperatur von 300 °C ergaben eine Verbesserung um den Faktor 1,8 gegenüber einem identischen Vergleichsmaterial ohne Expancel-Mikrokapsel-Zusatz.

Die Messung der Schaumhöhe erfolgte dabei gemäß den "Zulassungsgrundsätzen für dämmschichtbildende Baustoffe" des DIBt (Deutsches Institut für Bautechnik).

### Ausführungsbeispiel 3: Herstellung eines intumeszierenden Brandschutzartikels umfassend 3 Gew.-% Expancel-Mikrokapseln, 25 Gew.-% Blähgraphit und 5 Gew.-% PET-Pulver

### 1) Herstellung der ersten Komponente einer aus einem Zwei-Komponenten-Gießsystem auf Basis von Polyurethan bestehenden Polymermatrix:

200,0 g eines Polyols vom Typ Desmophen 3426L werden durch Anlegen von Vakuum und gleichzeitigem Erhitzen auf 120 °C entgast bzw. entwässert. Anschließend lässt man auf ca. 80 °C abkühlen und gibt 17,7 g 1,4-Butandiol sowie 11,3 g Trimethylolpropan als Vernetzer hinzu. Nach vollständigem Lösen des Trimethylolpropans lässt man auf Raumtemperatur abkühlen und fügt 0,4 g Dabco MB20 und 1,8 g Dabco NE1070 als Katalysatoren hinzu. Nach Zugabe dieser beiden Katalysatoren werden nacheinander 14,2 g Baylith^{®} T (als Wasseradsorber), 127,6 g AFLAMMAN TL1017 (als Bestandteil (iii)), 21,2 g Expancel-Mikrokapseln (Typ 920 DUX 40) (als Bestandteil (ii)), 35,4 g PET-Pulver (≤ 250 µm) und 1,8 g Pigmentfarbstoff zugesetzt. Die Bestandteile werden eingemischt und die dabei eingerührte Luft wird durch nachträglich angelegtes Vakuum wieder entfernt. Anschließend wird unter mechanischem Rühren 177,4 g NORD-MIN 351 Blähgraphit (als Bestandteil (i)) hinzugefügt und die hierbei eingerührte Luft erneut durch Vakuum entfernt.

### 2) Herstellung des Zwei-Komponenten-Gießsystems der Polymermatrix auf Basis von Polyurethan zur Herstellung einer Brandschutzbandage (insbesondere zur Kabelabschottung):

Zur Herstellung einer Brandschutzbandage als intumeszierenden Brandschutzartikel wird die unter 1) beschriebene gefertigte erste Komponente des Zwei-Komponenten-Systems mit der zweiten Komponente, 100 g eines Isomerengemisches aus 4,4'-Diphenylmethandiisocyanat und 2,4'-Diphenylmethandiisocyanat im Verhältnis 65:35 gründlich vermischt und in Form gegossen. Das Material besitzt eine Topfzeit im Bereich von etwa 5 bis 10 Minuten, abhängig von der Umgebungs- und Werkzeugtemperatur. Nach etwa zwei bis drei Stunden kann das Material entformt werden.

## Patentansprüche

1. (a) Brandschutzmischung zur Herstellung eines intumeszierenden Brandschutzartikels, umfassend
oder
(b) intumeszierender Brandschutzartikel, umfassend
ein Matrixmaterial, in das die folgenden Bestandteile eingebettet sind:
(i) intumeszierender Blähgraphit,
(ii)
(A) intumeszierende, alkangefüllte Mikrokapseln,
oder
(B) ein oder mehrere verkapselte Stickstoff-abspaltende und/oder Kohlendioxid-abspaltende Treibmittel,
sowie
(iii) ein oder mehrere Flammschutzmittel ausgewählt aus der Gruppe bestehend aus Ammoniumpolyphosphate und
gegebenenfalls
(iv) sonstige Bestandteile.

2. (a) Brandschutzmischung bzw. (b) intumeszierender Brandschutzartikel nach Anspruch 1, wobei Bestandteil (ii) aus intumeszierenden, alkangefüllten Mikrokapseln besteht.

3. (a) Brandschutzmischung bzw. (b) intumeszierender Brandschutzartikel nach Anspruch 1 oder 2, wobei der (i) intumeszierende Blähgraphit eine maximale freie Expansion von 150 bis 500 ml / g, vorzugsweise von 350 bis 450 ml / g besitzt.

4. (a) Brandschutzmischung bzw. (b) intumeszierender Brandschutzartikel nach Anspruch 1, 2 oder 3 wobei
- die Onset-Temperatur des (i) intumeszierenden Blähgraphits in einem Bereich von 140 bis 180 °C, vorzugsweise in einem Bereich von 140 bis 160 °C, liegt, und/oder
- die Onset-Temperatur der (ii) (A) intumeszierenden, alkangefüllten Mikrokapseln bzw. des (ii) (B) einen oder der mehreren verkapselten Stickstoffabspaltenden und/oder Kohlendioxid-abspaltenden Treibmittel in einem Bereich von 75 bis 170 °C, vorzugsweise in einem Bereich von 95 bis 130 °C, liegt.

5. (a) Brandschutzmischung bzw. (b) intumeszierender Brandschutzartikel nach einem der Ansprüche 1 bis 4, wobei die Onset-Temperatur des (i) intumeszierenden Blähgraphits um 30 bis 60 °C, vorzugsweise um 40 °C, höher ist als die Onset-Temperatur der (ii) (A) intumeszierenden, alkangefüllten Mikrokapseln bzw. des (ii) (B) einen oder der mehreren verkapselten Stickstoffabspaltenden und/oder Kohlendioxid-abspaltenden Treibmittel.

6. (a) Brandschutzmischung bzw. (b) intumeszierender Brandschutzartikel nach einem der Ansprüche 2 bis 5, wobei die (ii) (A) intumeszierenden, alkangefüllten Mikrokapseln intumeszierende, Isopentan-gefüllte Mikrokapseln sind.

7. Intumeszierender Brandschutzartikel nach einem der vorangehenden Ansprüche, wobei der Brandschutzartikel ein Formkörper ist.

8. Intumeszierender Brandschutzartikel nach einem der Ansprüche 2 bis 7, umfassend
(b1) eine Gesamtmenge von 10 bis 35 Gew.%, vorzugsweise 20 bis 25 Gew.-%, (i) intumeszierenden Blähgraphits sowie 2 bis 20 Gew.%, vorzugsweise 5 bis 10 Gew.-%, (ii) (A) intumeszierende, alkangefüllte Mikrokapseln, vorzugsweise 20 bis 25 Gew.-% (i) intumeszierenden Blähgraphits sowie 5 bis 10 Gew.-% (ii) (A) intumeszierende, alkangefüllte Mikrokapseln
oder
(b2) eine Gesamtmenge von 10 bis 35 Gew.%, vorzugsweise 15 bis 25 Gew.-%, (i) intumeszierenden Blähgraphits sowie maximal 10 Gew.-%, vorzugsweise maximal 5 Gew.-%, (ii) (A) intumeszierende, alkangefüllte Mikrokapseln, vorzugsweise 15 bis 25 Gew.-% (i) intumeszierenden Blähgraphits sowie maximal 5 Gew.-% (ii) (A) intumeszierende, alkangefüllte Mikrokapseln, bezogen auf das Gesamtgewicht des intumeszierenden Brandschutzartikels.

9. Intumeszierender Brandschutzartikel nach Anspruch 8, umfassend gemäß Alternative (b2) eine Gesamtmenge von 10 bis 35 Gew.-%, vorzugsweise 15 bis 25 Gew.% (i) intumeszierenden Blähgraphits sowie maximal 10 Gew.-%, vorzugsweise maximal 5 Gew.-%, (ii) (A) intumeszierende, alkangefüllte Mikrokapseln,
sowie
als einen sonstigen Bestandteil (iv) eine Gesamtmenge von maximal 10 Gew.-%, vorzugsweise 2 bis 5 Gew.-%, Kunststoffpulver,
jeweils bezogen auf das Gesamtgewicht des intumeszierenden Brandschutzartikels.

10. Intumeszierender Brandschutzartikel nach
- einem der Ansprüche 1 bis 7 oder nach Anspruch 8, Alternative (b1), wobei der Brandschutzartikel eine Rohrabschottung für brennbare Rohre oder ein Bestandteil einer solchen Rohrabschottung ist, oder
- einem der Ansprüche 1 bis 7 oder nach Anspruch 8, Alternative (b2), oder nach Anspruch 8, wobei der Brandschutzartikel eine Kabelabschottung oder ein Bestandteil einer solchen Kabelabschottung ist.

11. Verwendung einer (a) Brandschutzmischung nach einem der Ansprüche 1 bis 6 zur Herstellung eines intumeszierenden Brandschutzartikels, insbesondere eines (b) intumeszierenden Brandschutzartikels nach einem der Ansprüche 1 bis 10.

12. Verfahren zur Herstellung einer (a) Brandschutzmischung nach einem der Ansprüche 1 bis 6 zur Herstellung eines intumeszierenden Brandschutzartikels, insbesondere eines (b) intumeszierenden Brandschutzartikels nach einem der Ansprüche 1 bis 10, mit folgendem Schritt:
- Einbetten der Bestandteile (i), (ii), (iii) sowie gegebenenfalls (iv) sonstiger Bestandteile in ein Matrixmaterial.

13. Verfahren zur Abschottung von brennbaren Rohren oder von Kabeln, mit folgendem Schritt:
- zumindest teilweises Umschließen und/oder in Kontakt bringen eines Rohres oder eines oder mehrerer Kabel mit einer (a) Brandschutzmischung nach einem der Ansprüche 1 bis 6 oder einem (b) intumeszierenden Brandschutzartikel nach einem der Ansprüche 1 bis 10.

## Claims

1. (a) Fire protection mixture for the preparation of an intumescent fire protection article, comprising
or
(b) intumescent fire protection article, comprising
a matrix material, in which the following components are embedded:
(i) intumescent expandable graphite,
(ii)
(A) intumescent, alkane-filled micro-capsules,
or
(B) one or more encapsulated nitrogen-releasing and/or carbon dioxide-releasing blowing agents,
as well as
(iii) one or more flame inhibitors selected from the group consisting of ammonium polyphosphates and
optionally
(iv) further components.

2. (a) Fire protection mixture or (b) intumescent fire protection article according to claim 1, wherein component (ii) consists of intumescent, alkane-filled micro-capsules.

3. (a) Fire protection mixture or (b) intumescent fire protection article according to claim 1 or 2, wherein the (i) intumescent expandable graphite has a maximum free expansion of 150 to 500 ml/g, preferably of 350 to 450 ml/g.

4. (a) Fire protection mixture or (b) intumescent fire protection article according to claim 1, 2 or 3, wherein
- the onset temperature of the (i) intumescent expandable graphite is in the range from 140 to 180 °C, preferably in the range from 140 to 160 °C,
and/or
- the onset temperature of the (ii) (A) intumescent, alkane-filled micro-capsules or of the (ii) (B) one or more encapsulated nitrogen-releasing and/or carbon dioxide-releasing blowing agent(s) is in the range from 75 to 170°C, preferably in the range from 95 to 130 °C.

5. (a) Fire protection mixture or (b) intumescent fire protection article according to one of claims 1 to 4, wherein the onset temperature of the (i) intumescent expandable graphite is by 30 to 60 °C, preferably by 40 °C, higher than the onset temperature of the (ii) (A) intumescent, alkane-filled micro-capsules or of the (ii) (B) one or more encapsulated nitrogen-releasing and/or carbon dioxide-releasing blowing agent(s).

6. (a) Fire protection mixture or (b) intumescent fire protection article according to one of claims 2 to 5, wherein the (ii) (A) intumescent, alkane-filled micro-capsules are intumescent, isopentane-filled micro-capsules.

7. Intumescent fire protection article according to one of the previous claims, wherein the fire protection article is a molded body.

8. Intumescent fire protection article according to one of claims 2 to 7, comprising (b1) a total amount of 10 to 35 wt.-%, preferably 20 to 25 wt.-%, (i) intumescent expandable graphite as well as 2 to 20 wt.-%, preferably 5 to 10 wt.-%, (ii) (A) intumescent, alkane-filled micro-capsules,
preferably 20 to 25 wt.-% (i) intumescent expandable graphite as well as 5 to 10 wt.-% (ii) (A) intumescent, alkane-filled micro-capsules
or
(b2) a total amount of 10 to 35 wt.-%, preferably 15 to 25 wt.-%, (i) intumescent expandable graphite as well as a maximum of 10 wt.-%, preferably a maximum of 5 wt.-%, (ii) (A) intumescent, alkane-filled micro-capsules,
preferably 15 to 25 wt.-% (i) intumescent expandable graphite as well as a maximum of 5 wt.-% (ii) (A) intumescent, alkane-filled micro-capsules,
based on the total weight of the intumescent fire protection article.

9. Intumescent fire protection article according to claim 8, comprising
according to alternative (b2) a total weight of 10 to 35 wt.-%, preferably 15 to 25 wt.-% (i) intumescent expandable graphite as well as a maximum of 10 wt.-%, preferably a maximum of 5 wt.-%, (ii) (A) intumescent, alkane-filled micro-capsules,
as well as
as a further component (iv), a total amount of a maximum of 10 wt.-%, preferably 2 to 5 wt.-%, synthetic powder,
in each case based on the total weight of the intumescent fire protection article.

10. Intumescent fire protection article according to
- one of claims 1 to 7 or claim 8, alternative (b1), wherein the fire protection article is a pipe isolation for combustible pipes or a component of such a pipe isolation, or
- one of claims 1 to 7 or claim 8, alternative (b2), or according to claim 8, wherein the fire protection article is a cable isolation or a component of such a cable isolation.

11. Use of a (a) fire protection mixture according to any one of claims 1 to 6 for the preparation of an intumescent fire protection article, preferably a (b) intumescent fire protection article according to one of claims 1 to 10.

12. Method for the preparation of a (a) fire protection mixture according to one of claims 1 to 6 for the preparation of an intumescent fire protection article, preferably of a (b) intumescent fire protection article according to one of claims 1 to 10, comprising the following step:
- embedding of components (i), (ii), (iii) and optionally (iv) of further components in a matrix material.

13. Method for the isolation of combustible pipes or cables, comprising the following step:
- at least partially enveloping and/or contacting a pipe or one or more cables with a (a) fire protection mixture according to one of claims 1 to 6 or a (b) intumescent fire protection article according to one of claims 1 to 10.

## Revendications

1. (a) mélange ignifuge destiné à la fabrication d'un article ignifuge intumescent, comprenant
ou
(b) article ignifuge intumescent, comprenant
une matière de matrice dans laquelle sont enrobés les composants suivants :
(i) du graphite expansé intumescent,
(ii)
(A) des microcapsules intumescentes remplies d'alcane
ou
(B) un ou plusieurs agent(s) de gonflement encapsulé(s) de séparation de l'azote et/ou de séparation du dioxyde de carbone,
ainsi que
(iii) un ou plusieurs agent(s) ignifuge(s) choisi(s) dans le groupe constitué par le polyphosphate d'ammonium et,
le cas échéant,
(iv) d'autres composants.

2. (a) mélange ignifuge ou bien (b) article ignifuge intumescent selon la revendication 1, dans lequel le composant (ii) se compose de microcapsules intumescentes remplies d'alcane.

3. (a) mélange ignifuge ou bien (b) article ignifuge intumescent selon la revendication 1 ou 2, dans lequel ledit (i) graphite expansé intumescent présente une expansion libre maximale comprise entre 150 et 500 ml/g, de préférence entre 350 et 450 ml/g.

4. (a) mélange ignifuge ou bien (b) article ignifuge intumescent selon la revendication 1, 2 ou 3, dans lequel
- la température onset dudit (i) graphite expansé intumescent est comprise dans une plage allant de 140 à 180 °C, de préférence dans une plage allant de 140 à 160 °C,
et/ou
- la température onset des (ii) (A) microcapsules intumescentes remplies d'alcane ou bien dudit (ii) (B) un ou des plusieurs agent(s) de gonflement encapsulé(s) de séparation de l'azote et/ou de séparation du dioxyde de carbone est comprise dans une plage allant de 75 à 170 °C, de préférence dans une plage allant de 95 à 130 °C.

5. (a) mélange ignifuge ou bien (b) article ignifuge intumescent selon l'une quelconque des revendications 1 à 4, dans lequel la température onset dudit (i) graphite expansé intumescent est de 30 à 60 °C, de préférence de 40 °C, supérieure à la température onset des (ii) (A) microcapsules intumescentes remplies d'alcane ou bien dudit (ii) (B) un ou des plusieurs agent(s) de gonflement encapsulé(s) de séparation de l'azote et/ou de séparation du dioxyde de carbone.

6. (a) mélange ignifuge ou bien (b) article ignifuge intumescent selon l'une quelconque des revendications 2 à 5, dans lequel les (ii) (A) microcapsules intumescentes remplies d'alcane sont des microcapsules intumescentes remplies d'isopentane.

7. Article ignifuge intumescent selon l'une quelconque des revendications précédentes, dans lequel ledit article ignifuge est un corps moulé.

8. Article ignifuge intumescent selon l'une quelconque des revendications 2 à 7, comprenant
(b1) une quantité totale comprise entre 10 et 35 % en poids, de préférence entre 20 et 25 % en poids, de (i) graphite expansé intumescent ainsi qu'entre 2 et 20 % en poids, de préférence entre 5 et 10 % en poids, de (ii) (A) microcapsules intumescentes remplies d'alcane,
de préférence entre 20 et 25 % en poids de (i) graphite expansé intumescent ainsi qu'entre 5 et 10 % en poids de (ii) (A) microcapsules intumescentes remplies d'alcane,
ou
(b2) une quantité totale comprise entre 10 et 35 % en poids, de préférence entre 15 et 25 % en poids, de (i) graphite expansé intumescent ainsi que 10 % en poids au maximum, de préférence 5 % en poids au maximum, de (ii) (A) micro-capsules intumescentes remplies d'alcane,
de préférence entre 15 et 25 % en poids de (i) graphite expansé intumescent ainsi que 5 % en poids au maximum de (ii) (A) microcapsules intumescentes remplies d'alcane,
par rapport au poids total dudit article ignifuge intumescent.

9. Article ignifuge intumescent selon la revendication 8, comprenant selon l'alternative (b2), une quantité totale comprise entre 10 et 35 % en poids, de préférence entre 15 et 25 % en poids, de (i) graphite expansé intumescent ainsi que 10 % en poids au maximum, de préférence 5 % en poids au maximum, de (ii) (A) microcapsules intumescentes remplies d'alcane,
ainsi que,
comme un autre composant (iv), une quantité totale de 10 % en poids au maximum, de préférence comprise entre 2 et 5 % en poids, de poudres de matière plastique,
respectivement par rapport au poids total dudit article ignifuge intumescent.

10. Article ignifuge intumescent selon
- l'une quelconque des revendications 1 à 7 ou selon la revendication 8, alternative (b1), dans lequel ledit article ignifuge est un isolement de tuyau pour des tuyaux inflammables ou une partie intégrante d'un tel isolement de tuyau, ou selon
- l'une quelconque des revendications 1 à 7 ou selon la revendication 8, alternative (b2), ou selon la revendication 8, dans lequel ledit article ignifuge est un isolement de câble ou une partie intégrante d'un tel isolement de câble.

11. Utilisation d'un (a) mélange ignifuge selon l'une quelconque des revendications 1 à 6, pour la fabrication d'un article ignifuge intumescent, en particulier d'un (b) article ignifuge intumescent selon l'une quelconque des revendications 1 à 10.

12. Procédé de préparation d'un (a) mélange ignifuge selon l'une quelconque des revendications 1 à 6, pour la fabrication d'un article ignifuge intumescent, en particulier d'un (b) article ignifuge intumescent selon l'une quelconque des revendications 1 à 10, comprenant l'étape suivante :
- enrober les composants (i), (ii), (iii) ainsi que, le cas échéant, (iv) d'autres composants dans une matière de matrice.

13. Procédé d'isolement de tuyaux inflammables ou de câbles, comprenant l'étape suivante :
- enrober au moins en partie et/ou mettre en contact un tuyau ou un ou plusieurs câble(s) de/avec un (a) mélange ignifuge selon l'une quelconque des revendications 1 à 6 ou de/avec (b) un article ignifuge intumescent selon l'une quelconque des revendications 1 à 10.
